# EUROPÄISCHE PATENTSCHRIFT

(11) **EP 0 412 603 B1**
(45) Veröffentlichungstag und Bekanntmachung des Hinweises auf die Patenterteilung: **10.05.1995**
(21) Anmeldenummer: 90202091.6
(22) Anmeldetag: 31.07.1990
(51) Int. Cl.: G02B 6/44

(54) **Speichereinrichtung für Überlängen einer optischen Leitung**
Storage device for surplus length of an optical conductor
Dispositif de stockage pour la surlongueur d'un conducteur optique

(30) Priorität: 05.08.1989 DE 3926022
(43) Veröffentlichungstag der Anmeldung: 13.02.1991
(73) Patentinhaber: Philips Patentverwaltung GmbH, 22335 Hamburg (DE); Philips Electronics N.V., 5621 BA Eindhoven (NL)
(72) Erfinder: Becker, Dr. Johann A., D-5063 Overath (DE); Holzmann, Olaf, D-5000 Köln 1 (DE); Deusser, Peter, D-5000 Köln 90 (DE)
(74) Vertreter: Erdmann, Anton, Dipl.-Ing.

(56) Entgegenhaltungen:
- EP-A- 0 214 700
- DE-A- 2 607 950
- DE-A- 3 706 518

## Beschreibung

Die Erfindung bezieht sich auf eine Speichereinrichtung für Überlängen einer optischen Leitung, mit einem zwischen Flanschen befindlichen Wickelkern zum gleichzeitigen parallelen Aufwickeln der Enden der optischen Leitung und mit einem durch den Wickelkern verlaufenden, einen etwa S-förmigen Bereich enthaltenden Umlenkkanal zum Hindurchführen der optischen Leitung.

Bei einer durch die DE-OS 37 06 518 bekannten derartigen Speichereinrichtung werden die Enden einer optischen Leitung radial übereinander gewickelt. Dann ist die Windungslänge des außen gewickelten Endes größer als diejenige des innen gewickelten Endes. Beim gemeinsamen Aufwickeln der Enden der optischen Leitung wird folglich vom außen liegenden Ende eine größere Länge aufgewickelt. Das wirkt sich insbesondere dann störend aus, wenn zahlreiche Windungen gewickelt werden.

Der Erfindung liegt deshalb die Aufgabe zugrunde, die Anordnung der eingangs genannten Art derart zu gestalten, daß gleich große Längenabschnitte der Enden der optischen Leitung aufgewickelt werden.

Die Lösung gelingt dadurch, daß die zwischen den Flanschen gemessene Breite bₖ des Wickelkerns bₖ = (2 + 1/n) . bₒ beträgt, wobei bₒ der Durchmesser bzw. die Breite der optischen Leitung und n > 3 ist, und daß beide Enden der optischen Leitung axial nebeneinander auf einer gemeinsamen Wickelfläche aufwickelbar sind.

Erfindungsgemäß werden die beiden Enden der optischen Leitung nebeneinander gewickelt, so daß deren Windungslängen genau gleich sind. Von beiden Enden wird dann stets ein gleich langer Abschnitt aufgewickelt. Im eine Schlaufe bildenden Umlenkkanal wird zusätzlich die optische Leitung von der Windungsebene des einen Endes in die Windungsebene des zweiten Endes geführt.

Es ist vorteilhaft, daß die Einführöffnung und die Ausführöffnung des Umlenkkanals in etwa nebeneinander angeordnet sind. Dann beginnt der Wickelvorgang für beide Enden an etwa gleicher Stelle.

Eine vorteilhafte Ausführungsform der Erfindung ist dadurch gekennzeichnet, daß der Umlenkkanal teilweise als rinnenartige Vertiefung der Wickelfläche des Wickelkerns ausgebildet ist, wobei die Abmessungen der Vertiefung den Abmessungen der optischen Leitung angepaßt sind. Da dann der innerhalb des Wickelkerns verlaufende Teil des Umlenkkanals besonders kurz ist, kann die optische Leitung z.B. zur Lagekorrektur mit verringerter Reibung leichtgängig durch den Umlenkkanal gezogen werden.

Gemäß einer bevorzugten Ausführungsform ist vorgesehen, daß der Wickelkern einstückiger Bestandteil eines Flansches und der zweite Flansch lösbar am Kern befestigt ist, und daß der Umlenkkanal als offene und durch den zweiten Flansch abgedeckte Rinne des Kerns ausgebildet ist. Vor der Befestigung des zweiten Flansches, welche insbesondere über Rastelemente erfolgen kann, wird der mittlere Bereich der optischen Leitung zur Bildung einer Schlaufe in den noch offenen Umlenkkanal eingelegt. Erforderlichenfalls kann im Kern ein den Umlenkkanal unterbrechender Spleißraum vorgesehen sein, welcher nach dem Befestigen des zweiten Flansches sicher abgedeckt ist.

Die Speichereinrichtung kann eine längliche Form gemäß der DE-OS 37 06 518 haben. Dabei kann der Wickelkern aus zwei zylindrischen Kernelementen bestehen, welche durch den Umlenkkanal getrennt sind.

Besonders vorteilhaft sind kreisrunde Speichereinrichtungen, welche in beliebiger Winkellage in einen Behälter gelegt werden können, so daß Überlängen einer optischen Leitung feinstufig aufwickelbar und speicherbar sind.

Eine optische Leitung im Sinne der vorliegenden Erfindung kann ein einzelner Lichtwellenleiter (LWL) mit oder ohne Sekundär-Coating oder auch ein Flachband aus mehreren nebeneinander geklebten LWL sein.

Die Vorteile der Erfindung werden anhand der Beschreibung von in der Zeichnung dargestellten Ausführungsbeispielen verdeutlicht.
Fig. 1 zeigt einen Querschnitt durch den Wickelkern einer ersten Ausführungsform der Erfindung,
Fig. 2 zeigt einen Längsschnitt gemäß der Linie A-A nach Fig. 1 in vergrößertem Maßstab,
Fig. 3 zeigt den skizzierten Verlauf der Enden einer aufgewickelten optischen Leitung,
Fig. 4 zeigt einen Querschnitt durch eine zweite Ausführungsform der Erfindung,
Fig. 5 zeigt einen Längsschnitt gemäß der Linie B-B nach Fig. 4 in vergrößertem Maßstab

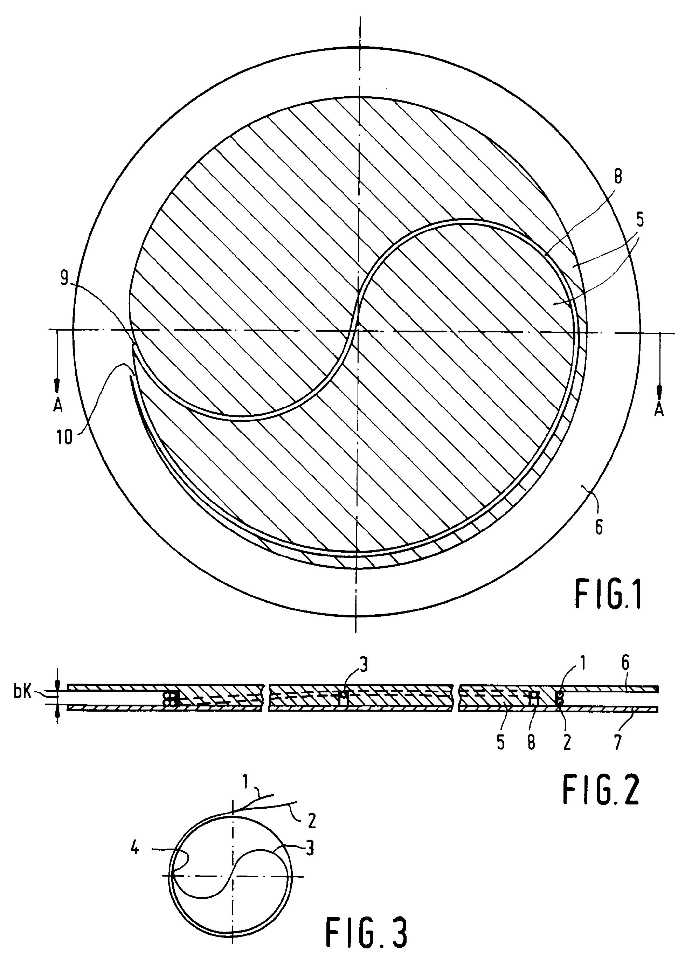

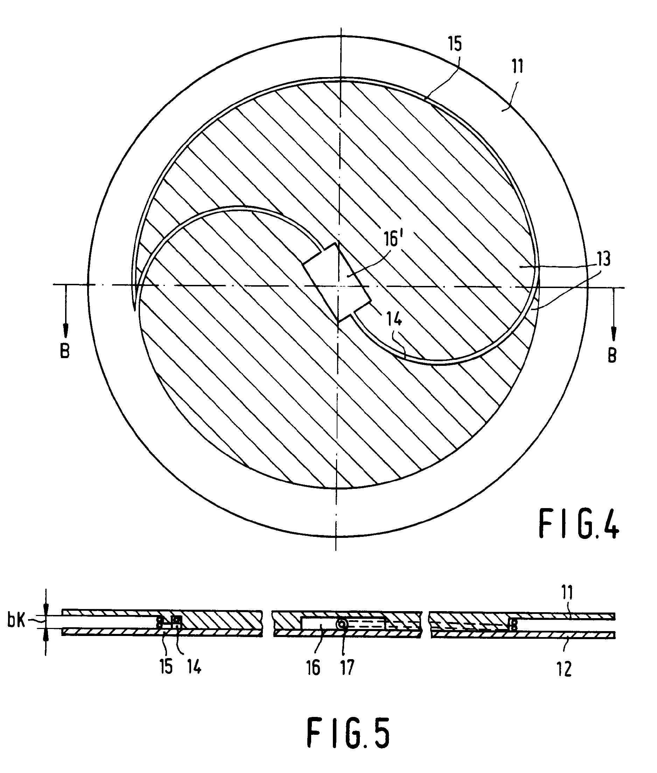

Mittels der in den Fig. 1 und 2 sowie 4 und 5 dargestellten Speichereinrichtungen sollen die Enden 1 und 2 einer optischen Leitung gemäß Fig. 3 aufgewickelt werden. Der mittlere Bereich der optischen Leitung ist in Form einer Schlaufe 3 geführt, wobei eine S-förmige Umlenkung eines der Enden der optischen Leitung in die Richtung des anderen Endes erfolgen muß. Ab der Stelle 4 verlaufen die aus dem Schlaufenbereich kommenden Enden 1 und 2 erfindungsgemäß auf einer gemeinsamen Wickelfläche axial nebeneinander, wie es in den Fig. 2 und 5 erkennbar ist. Sie sind gemäß Fig. 2 auf die zylindrische Wickelfläche des Wickelkerns 5 in einer oder mehreren Lagen gewickelt.

Der Wickelkern 5 ist an einen Flansch 6 angeformt. Ein zweiter Flansch 7 ist am Wickelkern 5 lösbar befestigt, beispielsweise durch Schraub- oder Rastverbindungen. Er deckt den im Wickelkern einseitig geöffneten Umlenkkanal 8 ab. Die Enden 1 und 2 werden an benachbarten Stellen 9 und 10 in den Umlenkkanal 8 des Wickelkerns 5 geleitet. Dabei dringen die Enden 1 und 2 in verschiedenen Wickelebenen axial nebeneinander in den Umlenkkanal 8 ein.

Bei der abgewandelten Ausführungsform der Erfindung nach den Fig. 4 und 5 ist zwischen Flanschen 11 und 12 wiederum ein mit dem Flansch 11 einstückiger Kern 13 angeordnet. Der Umlenkkanal verläuft mit seinen S-förmigen Bereich 14 durch den Wickelkern 13. Ein halbkreisförmiger Bereich 15 des Umlenkkanals ist als Rinneneinsenkung in die Wickelfäche des Wickelkerns 13 ausgebildet. Dicke und Breite der Rinne entsprechen den Abmessungen des darin zu führenden Abschnitts der optischen Leitung.

Im zentralen Bereich des Wickelkerns 13 ist ein Hohlraum 16 vorgesehen, in welchen eine von einem Spleißschutz 17 umgebene Verbindungsstelle der optischen Leitung allseitig geschützt unterbringbar ist.

Eine erfindungsgemäße Speichereinrichtung ist insbesondere zur Aufnahme einer LWL-Schaltleitung geeignet. Derartige Schaltleitungen dienen dazu, Verbindungen zwischen den Lichtwellenleitern verschiedener, insbesondere in optischen Schaltverteilern endender optischer Kabel herzustellen.

Erfindungsgemäß ausgebildete Speichereinrichtungen können auch als Transportgehäuse für darin aufgewickelte LWL-Schaltleitungen dienen.

Bei den in den Figuren dargestellten Ausführungsbeispielen haben die Wickelkerne 5 bzw. 13 einen Durchmesser von etwa 120 mm. Die S-Bögen der Umlenkkanäle haben einen Krümmungsradius von etwa 30 mm, damit der zulässige Krümmungsradius der optischen Leitung nicht unterschritten wird.

Für die axiale Breite bₖ der Wickelkerne 5 bzw. 13 wurde 1,9 mm gewählt, also geringfügig mehr als der doppelte Wert des Durchmessers bₒ = 0,9 mm der Enden 1 und 2 der optischen Leitung.

## Patentansprüche

1. Speichereinrichtung für Überlängen einer optischen Leitung, mit einem zwischen Flanschen (6,7 bzw. 11,12) innerhalb einer zylindrischen Hüllfläche befindlichen Wickelkern (5,13) zum gleichzeitigen parallelen Aufwickeln der Enden (1,2) der optischen Leitung, wobei durch den Wickelkern (5,13) ein Umlenkkanal (8,14,15) verläuft, welcher einen etwa S-förmigen Längenabschnitt enthält, dadurch gekennzeichnet, daß an einen S-Bogen des Umlenkkanals ein gleichförmig gekrümmter und innerhalb des durch die zylindrische Hüllfläche definierten Zylinderraums verlaufender Längenabschnitt anschließt, welcher vom Ende dieses S-Bogens bis etwa zur Eintrittsöffnung (9) des anderen S-Bogens verläuft, wobei die Eintrittsöffnung (9) und die Austrittsöffnung (10) des Umlenkkanals im wesentlichen axial nebeneinander liegen.

2. Speichereinrichtung nach Anspruch 1,
dadurch gekennzeichnet, daß der Umlenkkanal teilweise als rinnenartige Vertiefung (15) der Wickelfläche des Wickelkerns (13) ausgebildet ist.

3. Speichereinrichtung nach Anspruch 1 oder 2,
dadurch gekennzeichnet, daß der Wickelkern (5,13) einstückiger Bestandteil eines Flansches (6,11) und der zweite Flansch (7,12) lösbar am Kern (5,13) befestigt ist und daß der Umlenkkanal (8,14) als offene und durch den zweiten Flansch (7,12) abgedeckte Rinne des Kerns ausgebildet ist.

4. Speichereinrichtung nach einem der Ansprüche 1 bis 3,
dadurch gekennzeichnet, daß im Kern (5,13) ein den Umlenkkanal (8,14) unterbrechender Spleißraum (16) vorgesehen ist.

5. Speichereinrichtung nach einem der Ansprüche 1 bis 4,
dadurch gekennzeichnet, daß sie kreisrund ist.

6. Speichereinrichtung nach einem der Ansprüche 1 bis 5,
dadurch gekennzeichnet, daß sie eine durch den Umlenkkanal verlaufende optische Leitung enthält und daß die zwischen den Flanschen (6 und 7 bzw. 11 und 12) gemessene Breite bₖ des Wickelkerns (5,13) · bₖ = (2 + 1/n) bₒ beträgt, wobei bₒ der Durchmesser bzw. die Breite der optischen Leitung und n > 3 ist.

## Claims

1. A storage device for excess lengths of an optical lead comprising a winding core (5,13), arranged between flanges (6,7 and 11,12, respectively) and surrounded by a cyulindrical enveloping surface, for winding simultaneously and in parallel the ends (1,2) of the optical lead, a guide duct (8,14,15) having an approximately S-shaped longitudinal section, extending through the winding core (5,13), characterized in that an S-shaped longitudinal section extending within the cylindrical space defined by the cylindrical enveloping surface is connected to an S-bend of the guide duct, said longitudinal section extending from the end of said S-bend to approximately the inlet opening (9) of the other S-bend, the inlet opening (9) and the outlet opening (10) of the guide duct being arranged essentially one beside the other.

2. A storage device as claimed in Claim 1 or 2, characterized in that the guide duct partly takes the form of a gutter-shaped depression (15) of the winding surface of the winding core (13).

3. A storage device as claimed in Claim 1 or 2, characterized in that the winding core (5,13) is an integral part of one flange (6,11) and the second flange (7,12) is detachably secured to the core (5,13), and in that the guide duct (8,14) takes the form of a gutter of the core, which is open and is covered by the second flange (7,12).

4. A storage device as claimed in any one of Claims 1 to 3, characterized in that the core (5,13) is provided with a splicing space (16), which interrupts the guide duct (8,14).

5. A storage device as claimed in any one of Claims 1 to 4, characterized in that it is circular.

6. A storage device as claimed in any one of Claims 1 to 5, characterized in that it comprises an optical lead which extends through the guide duct, and in that the width bₖ of the winding core (5,13), measured between the flanges (6 and 7 and 11 and 12, respectively), is bₖ = (2+1/n)·bₒ, bₒ being the diameter or the width of the optical lead and n > 3.

## Revendications

1. Dispositif de stockage pour des surlongueurs d'un conducteur optique, comportant un noyau d'enroulement (5, 13) disposé entre des brides (6, 7 respectivement 11, 12) dans une surface enveloppante cylindrique pour enrouler simultanément et parallèlement des extrémités (1, 2) du conducteur optique, un canal de guidage (8, 14, 15) qui présente une zone longitudinale presque en S s'étendant à travers le noyau d'enroulement (5, 13) , caractérisé en ce qu'une partie longitudinale présentant la même courbure et s'étendant dans la surface enveloppante définie par l'espace cylindrique se joint à une courbe en S du canal de guidage, ladite partie longitudinale s'étend à partir de l'extrémité de ladite courbe en S approximativement jusqu'à l'ouverture d'entrée (9) de l'autre courbe en S, l'ouverture d'entrée (9) et l'ouverture de sortie (10) étant situées l'une à côté de l'autre sensiblement de façon axiale.

2. Dispositif de stockage selon la revendication 1, caractérisé en ce que le canal de guidage est partiellement conçu comme un approfondissement (15) en forme de gorge de la surface d'enroulement du noyau d'enroulement (13).

3. Dispositif de stockage selon la revendication 1 ou 2 , caractérisé en ce que le noyau d'enroulement (5, 13) fait corps avec une bride (6, 11) et que la seconde bride (7, 12) est fixée amoviblement au noyau (5, 13) et en ce que le canal de guidage (8, 14) est conçu comme une gorge ouverte qui est recouverte par la seconde bride (7, 12) du noyau.

4. Dispositif de stockage selon l'une des revendications 1 à 3, caractérisé en ce que dans le noyau (5, 13) il est prévu un espace d'épissure (16) interrompant le canal de guidage (8, 14).

5. Dispositif de stockage selon l'une des revendications 1 à 4, caractérisé en ce qu'il est circulaire.

6. Dispositif de stockage selon l'une des revendications 1 à 5, caractérisé en ce qu'il contient un conducteur optique passant par le canal de guidage et en ce que la largueur bₖ du noyau d'enroulement (5, 13) mesurée entre les brides (6 et 7 respectivement 11 et 12) est égale à bₖ = (2 + 1/n)·bₒ, bₒ étant le diamètre respectivement la largeur du conducteur optique et en ce que n > 3.
